# EUROPEAN PATENT APPLICATION

(11) **EP 4 349 719 A1**
(43) Date of publication of application: **10.04.2024**
(21) Application number: 22199966.7
(22) Date of filing: 06.10.2022
(51) Int. Cl.: B64F 5/40

(54) **DETERMINING OPERATION TIME AFTER DAMAGE EVENTS ON A METALLIC COMPONENT OF AN AIRCRAFT**

(71) Applicant: Airbus Operations GmbH, 21129 Hamburg (DE)
(72) Inventor: Anatriello, Gianluca, 21129 Hamburg (DE); Starikov, Roman, 21129 Hamburg (DE)

(57) **Abstract**

Systems and methods for determining an operation time of an aircraft are described. The method includes the following steps: identifying (210) direct damage information on a surface of a metallic component (12) of an aircraft, wherein the direct damage information include a dimension of a damage area, an absolute position of the damage area on the aircraft, and a relative position of the damage area with regard to fasteners and/or other design features of the aircraft; determining (220) a knock-down-factor of the metallic component based on a database that includes an assignment of direct damage information and fatigue performance of the metallic component; determining (230) an operation time for the aircraft based on the knock-down-factor.

## Description

### Technical Field

The description generally relates to aircraft technology and particularly relates to a method and a system for determining an operation time of an aircraft after an external damage event that affects a component, particularly a metallic component, of the aircraft.

### Technical Background

Aircraft may be subject to external damages during flight. For example, an aircraft may be subject to lightning strikes which causes damages to components of the aircraft. Depending on the damages, the aircraft may require inspection and/or repair after landing. However, in case of minor damages, the aircraft may still be allowed to operate.

For example, lightning strike direct damages on metallic airframe are assessed. If the dimension and location of such a direct damage are within specified boundaries, the aircraft is allowed to operate for a given number of flights and is inspected again after this given number of flights to decide whether the aircraft requires to be repaired with a temporary or a permanent solution.

### Summary

It may be seen as an object to increase the accuracy of determining an operation time of an aircraft with a metallic component after a damage event like a lightning strike that affects the metallic component.

This object is solved by the subject matter of the independent claims.

A system and method according to the features of the independent claims is provided. Further developments can be derived from the dependent claims and from the following description.

Many of the features described with reference to the system may be implemented as method steps, or vice versa. Therefore, the description provided in the context of the system applies in an analogous manner also to the method for determining an operation time of an aircraft. In particular, the functions of the system and of its components (like the control device and the other components) may be implemented as method steps of the method and the method steps may be implemented as functions of the system, in particular of the control device.

According to an aspect, a system for determining an operation time of an aircraft is provided. The system comprises an image capturing device, configured to scan a surface of a metallic component of the aircraft and capture images of the metallic component of the aircraft; a control device, configured to receive the captured images from the image capturing device; and a memory device, including a database with direct damage information of the metallic component of the aircraft. The direct damage information include a dimension of a damage area, an absolute position of the damage area on the aircraft, and a relative position of the damage area with regard to fasteners and/or other design features of the aircraft. The control device is configured to identify direct damage information of damages within the captured images. The control device is configured to determine a knock-down-factor of the metallic component based on the database that includes an assignment of direct damage information and fatigue performance of the metallic component. The control device is configured to determine an operation time for the aircraft based on the knock-down-factor.

The direct damage information relating to a damage area indicate the criticality and the effect of a damage to the operation of the aircraft. Generally, the larger a damage area is, the shorter will be the interval until maintenance or next inspection. The absolute position of the damage area on the aircraft indicates if the damage is in a region that is more relevant to a safe operation of the aircraft than another region. The relative position of the damage area with regard to fasteners and/or other design features of the aircraft indicates the mechanical strength of the connection between the affected metallic component and the remaining components of the structure of the aircraft. For example, if the damage area is closer to a fastener, the mechanical strength of the related metallic component may be more affected by such a damage compared to a damage that is farther away from a fastener.

A metallic component as referred to herein may include or may be a solid metal material or a composite material including at least one metallic component. For example, the metallic component may be a fiber metal laminate or a sandwich component with multiple layers attached to one another, wherein at least one layer includes a metallic material or is made of a metallic material. In this example, the metallic layer may be an outer layer of the metallic component. In one example, the metallic component has a metallic surface or a metallic outer layer, e.g., aluminum.

The metallic component may encompass or include a fiber metal laminate, FML. FML are hybrid composite materials built up from interlacing layers of thin metals and fiber reinforced adhesives. FML typically consist of a laminate of multiple metal layers bonded with layers of composite material, wherein the outer layer of the FML is a metallic layer, e.g., aluminum, but not limited thereto. Examples of FML are ARALL (aramid reinforced aluminum laminate, based on aramid fibers), GLARE (glass reinforced aluminum laminate, based on highstrength glass fibers), CentrAl (which surrounds a GLARE core with thicker layers of aluminum), CARALL (carbon reinforced aluminum laminate, based on carbon fibers), TiGra (glass reinforced titanium laminate).

The metallic component may also be a metal sandwich component. A sandwich component includes a core material and outer layers arranged on two opposite sides of the core and attached thereto. The core may include a honeycomb or foam core material that is metallic based or plastic based. The outer layers are metallic faces that are bonded to the core material.

In other words, the metallic component may be a solid and/or homogenous metal material comprising, for example, aluminum, titan, steel, or the like, or a non-homogenous component including a metallic layer like FML, metal sandwich, metal bonded laminates, or the like, which especially include a metallic outer surface.

However, the control device may be configured to identify if the direct damage information exceeds a predetermined threshold value, e.g., if a damage requires immediate maintenance or additional inspection. In such a case, the system may output and alert message to inform an operator about the need of additional inspection and/or maintenance.

According to an embodiment, the image capturing device includes at least one of a camera or any other light sensor.

The image capturing device may include a sensor that operates in the spectral range of visible light or in the infrared spectrum. The image capturing device may be any device that is capable of capturing an image of an object that is located within the field of view of the image capturing device.

The image capturing device may be configured to capture static images or videos. In one embodiment, the image capturing device may include a lightning device that is arranged and configured to emit light towards the surface of the metallic component, in order to ensure that the images are captured under same or substantially the same conditions in regards of lightning. Thus, damages in images that are captured at different positions of the aircraft are comparable to each other in regards of the parameters derived from the captured images.

According to a further embodiment, the image capturing device is configured to respond to the reflectivity and/or absorbance of the damage area.

For example, the image capturing device is configured to detect different types of damages of the metallic component based on the reflectivity and/or absorbance of the surface that is captured by the image capturing device.

According to a further embodiment, the image capturing device is mounted to a mobile platform.

For example, the image capturing device may be mounted to a drone or any other vehicle that is configured to move along the surface of the aircraft and position the image capturing device so that the image capturing device is able to capture images of the surface of the aircraft. A drone may be preferred because it allows the image capturing device to be moved along the entire surface of the aircraft without any mounting or holding arms. In other words, the drone is a separate platform that can move on its own without a fixation device. In another example, the image capturing device may be attached to a robot arm (in this case, the robot arm may be stationary with a movable end, wherein this movable end corresponds to the mobile platform) that moves the image capturing device along the surface of the aircraft.

Generally, the image capturing device may be moved by the mobile platform so that it is moved at a certain distance from the surface of the aircraft. Thus, the images are taken from the same or substantially the same distance which may avoid any issues with the scale of the objects in the captured image.

However, in an alternate embodiment, the image capturing device may also be stationary and configured to capture an image of that metallic component. In this embodiment, the metallic component may be located in the field of view of the image capturing device in its entirety. Alternatively, the metallic component may be moved with respect to the image capturing device, while the image capturing device captures multiple images that relate to different regions of the surface of the metallic component. These different regions may be overlapping regions or non-overlapping regions of the surface of the metallic component.

According to a further embodiment, the control device is configured to determine a removed coating area and the damage area located within the removed coating area.

For example, the control device is configured to determine the damage area and the removed coating area based on different characterizing parameters of the captured image. In one example, the control device utilizes the different values of reflectivity and/or absorbance in the captured image to recognize the damage area and to delimit the damage area from the removed coating area. Furthermore, the control device is configured to delimit the removed coating area from an area where the coating has not been removed, i.e., which is the area that surrounds the damage area and the removed coating area and that is not affected by the damage incident.

According to a further embodiment, the control device is configured to determine a position of the image capturing device with respect to the metallic component and to determine the absolute position of the damage area and the relative position of the damage area based on the position of the image capturing device and the position of the damage area within the image captured by the image capturing device.

For example, the image capturing device may be controlled by the control device, so that the control device can access position values of the image capturing device. These position values may be values within a coordinate system that is defined with regard to the metallic component and/or the aircraft. The position values may be assigned to each image that is captured by the image capturing device. Based on the position values assigned to an image and based on the relative position of a damage area within that image, the position of the damage area at the aircraft can be determined

According to a further embodiment, the control device is configured to determine an area with melted metal material as the damage area.

In particular, the system is configured to identify regions of a surface of a metallic component of an aircraft which are damaged by a lightning strike. When a lightning strike hits a surface of the metallic component of an aircraft, damage to the structure, i.e., the metallic component, may occur. Depending on the particular damage, a maintenance interval may require adaptation to the particular damage. A minor damage may allow the maintenance interval to be extended, wherein a bigger damage may require a shorter maintenance interval.

With the system described herein, it is possible to identify and characterize damages to metallic components of an aircraft which results from lightning strike and to define an individual maintenance interval based on the particular damage. The control device distinguishes between the damage area and the removed coating area. Particularly the damage area, i.e., the melted metal material, contributes to reduced fatigue performance of the metallic component while removed coating does not substantially weaken the metallic component. Therefore, it is important to distinguish between the damage area and the removed coating area because the size of the damage area and the size of the removed coating area do not necessarily correlate with each other.

According to a further embodiment, the control device is configured to determine a fatigue performance value of the identified direct damage information of damages within the captured images based on the database included in the memory device.

The function of the system described herein may be summed up as follows: the image capturing device captures an image of a surface of a metallic component of the aircraft. The captured image is transmitted to the control device which executes image recognition algorithms on the captured image to recognize damages to the surface of the metallic component and to particularly identify a damage area and delimit the damage area from a removed coating area within which the damage area is located. The control device determines direct damage information of the damage area from the captured image and compares the direct damage information to entries in a database that is stored in the memory device. Based on this comparison, the control device identifies an entry in the database with direct damage information closest to the direct damage information retrieved from the captured image. Once the entry in the database is identified, the control device determines a maintenance interval that is assigned to the particular damage. Thus, the maintenance interval is determined individually for each particular damage. The approach described herein can be beneficially applied to metallic components of aircraft.

However, the system and its functions as described herein may also be applied to other industrial machinery and/or metallic components of technical systems. By using the database and the maintenance interval (or an equivalent value like a fatigue performance value of the metallic component) assigned to a particular damage, an aircraft or another technical system may be operated more reliably because maintenance is not done based on default values but based on individual and damage-related requirements.

The database that assigns a direct damage information to a fatigue performance may be populated with a plurality of entries, wherein each entry includes damage information of a certain damage incident assigned to a fatigue performance of the metallic component and/or assigned to a knock-down-factor of the metallic component. For example, the individual entries of that database may result from fatigue tests in which a metallic component undergoes artificially generated lightning strikes with the metallic component being tested with regard to its mechanical strength and/or resistance after it is subject to the lightning strikes. Once an artificially generated lightning strike hits the metallic component, the direct damage information of the damage is recorded from the metallic component and the fatigue performance is assigned to the direct damage information. For example, the metallic component may be inspected by a visual inspection system that is configured to record and/or capture the direct damage information from the damage area. The metallic component then undergoes fatigue performance testing by a testing device and the knock-down-factor of the metallic component and/or a value representing the fatigue performance is determined by the testing device. Finally, the value representing the fatigue performance or the knock-down-factor of the metallic component is assigned to the direct damage information and stored in the database. The database may include one or more entries. Each entry includes direct damage information that characterize one specific damage incident. Furthermore, each entry includes a fatigue performance value assigned to the specific damage incident of said entry.

Fatigue tests may include tests using mechanical test devices, ultrasound, X-ray, thermography and/or electrical impendence measurements. Such fatigue tests provide information about the actual or expected mechanical strength.

According to a further embodiment, the control device is configured to determine a size of a corroded area assigned to the damage area.

In particular, when the metallic component undergoes a subsequent inspection by the system, corrosion may occur in the area where the coating of the metallic component is removed and/or where the metallic component is damaged. By recognizing the size of the corroded area, the fatigue performance value of the metallic component may be determined more precisely.

The size of the corroded area may also be one parameter of the direct damage information and may be stored in the database in each entry.

According to another aspect, a method for determining an operation time of an aircraft is provided. The method includes the following steps: identifying direct damage information on a surface of a metallic component of an aircraft, wherein the direct damage information include a dimension of a damage area, an absolute position of the damage area on the aircraft, and a relative position of the damage area with regard to fasteners and/or other design features of the aircraft; determining a knock-down-factor of the metallic component based on a database that includes an assignment of direct damage information and fatigue performance of the metallic component; and determining an operation time for the aircraft based on the knock-down-factor.

The knock-down-factor is typically used to describe a reduction in fatigue life of a component with a damage compared to the component without the damage.

The operation time of an aircraft may be, for example, the number of flights that an aircraft is allowed to complete before the next inspection and/or maintenance is due.

According to an embodiment, the metallic component includes at least one metallic material like aluminum, steel, and titanium.

Damage area is a melted area, for example resulting from lighting strike. Preferably, the damage area relates to the melted area of a metallic component within the metal material and without considering a paint or any other coating of the metallic component. Thus, damage to the paint or the coating is not necessarily considered for determining the fatigue performance of the metallic component.

The dimension of the damage area particularly is the two-dimensional size of the melted area including breadth and width of the melted area at the broadest and widest region, respectively. The knock-down-factor is based on results of fatigue tests.

The relative position of the damage area with regard to fasteners and/or other design features of the aircraft includes a distance between the damage area and a fastener and/or another design feature of the aircraft that is closest to the damage area.

According to a further embodiment, the direct damage information includes a value that indicates the number of damages per unit area.

According to a further embodiment, the direct damage information includes information about the distance between neighboring individual damages, their distance, and/or, when two or more individual damages are directly adjacent to each other or overlap each other, the sum of the damaged area of those two or more individual damage areas.

The direct damage information may include these additional values to characterize a damage area more precisely.

According to a further embodiment, the method further includes the following steps: commanding a mobile image capturing device to scan the metallic component of an aircraft and capture images of the metallic component of the aircraft; transmitting the captured images to a control device; determining, by the control device, direct damage information of damages within the captured images; and determining, by the control device, a fatigue performance value based on the direct damage information of damages within the captured images.

### Brief description of the drawings

The subject matter will hereinafter be described in conjunction with the following drawing figures, wherein like numerals denote like elements, and wherein:
Fig. 1 is a schematic representation of a surface of a metallic component showing a damage area and fasteners;
Fig. 2 is a more detailed schematic representation of a damage area and a removed coating area;
Fig. 3 is a schematic representation of a system for determining an operation time of an aircraft;
Fig. 4 is a schematic representation of the steps of a method for determining operation time of an aircraft.

### Detailed description of the drawings

The following detailed description is merely exemplary in nature and is not intended to limit the invention and uses of the invention. Furthermore, there is no intention to be bound by any theory presented in the preceding background or the following detailed description.

The representations and illustrations in the drawings are schematic and not to scale. Like numerals denote like elements.

A greater understanding of the described subject matter may be obtained through a review of the illustrations together with a review of the detailed description that follows.

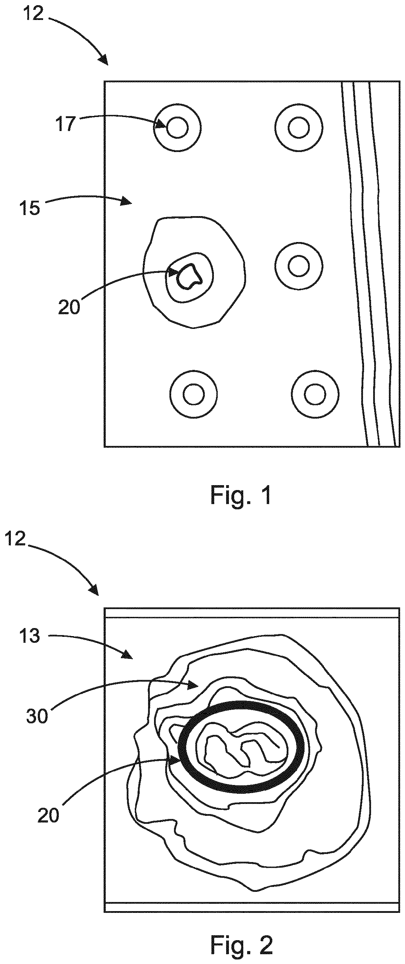

Fig. 1 shows a metallic component 12, which in particular may be a metallic component of an outer skin of an aircraft. The metallic component 12 comprises a surface 15. The metallic component 12 is attached to a structural element of the aircraft (not shown) with fasteners 17, of which six are shown in Fig. 1.

The fasteners 17 are arranged into columns, each column including three fasteners 17. The central fasteners 17 of the left column of fasteners was subject to a lightning strike and the corresponding damage area 20 is shown in Fig. 1. The damage area 20 particularly is that region of the surface 15 where the metal material of the metallic component 12 is melted.

The direct damage information describing the damage area 20 are indicative of the fatigue performance value of the metallic component 12. For example, the size of the damage area 20, which, as an approximation, has a circular shape, can be determined and indicates to what extent the metallic component 12 has been affected by the damage. Furthermore, the position of the damage area 20 at the metallic component 12 and/or at the aircraft and the relative position of the damage area 20 with regard to one or more fasteners 17 may be considered to determine the fatigue performance value of the metallic component 12 with a damage.

The direct damage information of the metallic component 12 may be derived from an image captured by an image capturing device. The derived direct damage information that indicate the damage area 20 may be compared to one or more entries of direct damage information in a database. That database typically includes multiple entries, wherein each entry assigns a direct damage information tuple to a fatigue performance value of the metallic component 12. Based on the fatigue performance value of an entry in the database, an interval for maintenance of the metallic component and/or the next inspection and/or repair of the metallic component can be determined. A control device is configured to compare the derived direct damage information of the metallic component 12 with the direct damage information of the entries in the database and identify at least one entry with direct damage information that are same or close to the derived direct damage information. The fatigue performance value of the identified at least one entry is considered for determining the interval for maintenance/inspection/repair of the metallic component. In case, multiple entries in the database include direct damage information that are similarly close to the derived direct damage information, those multiple entries may all be considered to determine the fatigue performance value, for example by determining an average of the fatigue performance value of those multiple entries.

Fig. 2 shows a more detailed schematic representation of a damage area 20 on the metallic component 12. The damage area 20 relates to the region where the metal material of the metallic component 12 is melted. Typically, when a lightning strike hits the surface of a metallic component of an aircraft, a coating 13 like paint or the like of the metallic component 12 is removed and the metal material experiences damage like melted material. However, that region of removed coating area 30 is typically larger in diameter than the damage area 20 where the metal material has been damaged. For determining the interval for maintenance/inspection/repair, the damage area 20 where the metal material is melted is primarily relevant. The removed coating area 30 may be considered in a subsequent or secondary step when it comes to damage due to potential corrosion which may occur when the coating 13 is removed.

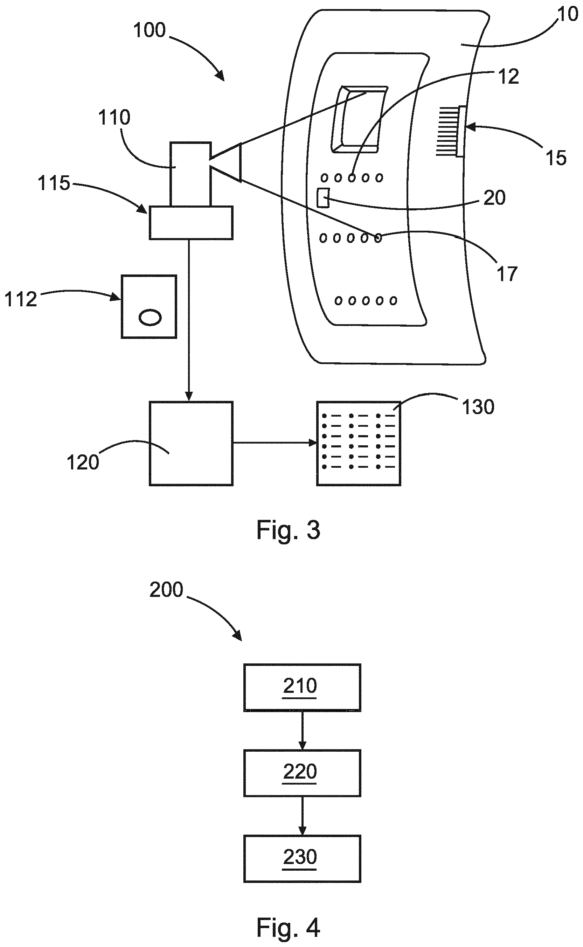

Fig. 3 schematically shows a system 100 for determining an operation time of an aircraft 10 (of which a part of the outer skin is schematically shown in Fig. 3) that has experienced lightning strike. The aircraft 10 comprises an outer skin with a metallic component 12 having a surface 15. The metallic component 12 is attached to a structural element of the aircraft (not shown) by multiple fasteners 17. An exemplary damage area 20 on the metallic component 12 is shown.

The system 100 includes an image capturing device 110 that captures images of the surface 15 of the metallic component 12 of the aircraft 10. The image capturing device 110 may be a camera or any other light-sensitive device or sensor that is capable of capturing an image of the surface of the metallic component 12. The image capturing device 110 may be mounted to a mobile platform 115. The mobile platform 115 is configured to move the image capturing device 110 to a desired position so that the image capturing device 110 captures an image at that position or captures multiple images while it is moved from a first position to a second position. The image capturing device 110 may be moved by the mobile platform 115 such that the entire surface of the aircraft 10 or at least the entire surface of the metallic component is captured in one or multiple images 112.

The image capturing device 110 transmits the images 112 or data sets be presenting the images 112 to the control device 120. The control device 120 may be configured to, and the mobile platform 115 to move the image capturing device 110 to a predetermined position. Furthermore, the control device 120 may be configured to, the image capturing device 110 to capture individual images. The mobile platform 115 may update the current position of the image capturing device 110 by sending corresponding data packets to the control device 120. Thus, the control device may know in real time the position of the image capturing device 110. Depending on the position of the image capturing device 110, the control device 120 may initiate the process of capturing an image at a given position.

The control device 120 is further configured to perform image processing algorithms to recognize damage areas 20 as shown in Figs. 1 and 2. In particular, the control device 120 is configured to delimit the damage area 20 from the removed coating area 30. In order to do so, the control device 120 may determine the damage area 20 and the removed coating area 30 by considering the reflectivity and/or the absorbance of light in the captured image. Other image recognition algorithms or approaches may be utilized to recognize the damage area and to delimit the damage area from the removed coating area. In order to determine an individual operation time of an aircraft until the next inspection/maintenance/repair, the damage area may be more relevant than the removed coating area.

In other words, the control device 120 determines direct damage information based on the captured image 112. The control device 120 compares the direct damage information of the captured image 112 with entries in a database that is contained in a memory device 130. Based on this comparison, the control device 120 determines one or more entries with direct damage information that are identical or almost identical to the direct damage information of the captured image and the fatigue performance value of the damaged metallic component is determined based on fatigue performance values assigned to the one or more entries identified in the database to be identical or almost identical to the direct damage information of the captured image.

Fig. 4 schematically shows a method 200 for determining operation time of an aircraft. The method includes the following steps: at 210, the method includes identifying direct damage information on a surface of a metallic component of an aircraft, wherein the direct damage information include a dimension of the damage area, an absolute position of the damage area on the aircraft, and the relative position of the damage area with regard to fasteners and/or other design features of the aircraft; and 220, the method includes determining a knock-down-factor of the metallic component based on a database that includes an assignment of direct damage information and fatigue performance of the metallic component; and at 230, the method includes determining an operation time for the aircraft based on the knock-down-factor.

The operation time for the aircraft may particularly relates to the number of flights until the next inspection/maintenance/repair is due. With the method and system described herein, this operation time can be individually determined based on the particular damage of the aircraft.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It will be understood that various changes may be made in the function and arrangement of elements described in an exemplary embodiment without departing from the scope of the claims.

Additionally, it is noted that "comprising" or "including" does not exclude any other elements or steps and "a" or "an" does not exclude a multitude or plurality. It is further noted that features or steps which are described with reference to one of the above exemplary embodiments may also be used in combination with other features or steps of other exemplary embodiments described above. Reference signs in the claims are not to be construed as a limitation.

### List of reference signs

- 10: aircraft
- 12: metallic component
- 13: coating
- 15: surface
- 17: fasteners
- 20: damage area
- 30: removed coating area
- 100: system
- 110: image capturing device
- 112: image
- 115: mobile platform
- 120: control device
- 130: memory device
- 200: method
- 210-230: method steps

## Claims

1. A system (100) for determining an operation time of an aircraft (10), the system (100) comprising:
an image capturing device (110), configured to scan a surface (15) of a metallic component (12) of the aircraft (10) and capture images of the metallic component (12) of the aircraft;
a control device (120), configured to receive the captured images from the image capturing device (110);
a memory device (130), including a database with direct damage information of the metallic component (12) of the aircraft (10), wherein the direct damage information include a dimension of a damage area (20), an absolute position of the damage area on the aircraft (10), and a relative position of the damage area with regard to fasteners (17) and/or other design features of the aircraft;
wherein the control device (120) is configured to identify direct damage information of damages within the captured images;
wherein the control device (120) is configured to determine a knock-down-factor of the metallic component based on the database that includes an assignment of direct damage information and fatigue performance of the metallic component;
wherein the control device (120) is configured to determine an operation time for the aircraft based on the knock-down-factor.

2. The system (100) of claim 1,
wherein the image capturing device (110) includes at least one of a camera or any other light sensor.

3. The system (100) of claim 1 or 2,
wherein the image capturing device (110) is configured to respond to the reflectivity and/or absorbance of the damage area (20).

4. The system (100) of any one of the preceding claims,
wherein the image capturing device (110) is mounted to a mobile platform (115).

5. The system (100) of any one of the preceding claims,
wherein the control device (120) is configured to determine a removed coating area (30) and the damage area (20) located within the removed coating area (30).

6. The system (100) of any one of the preceding claims,
wherein the control device (120) is configured to determine a position of the image capturing device (110) with respect to the metallic component (12) and to determine the absolute position of the damage area (20) and the relative position of the damage area (20) based on the position of the image capturing device (110) and the position of the damage area (20) within the image captured by the image capturing device (110).

7. The system (100) of any one of the preceding claims,
wherein the control device (120) is configured to determine an area with melted metal material as the damage area (20).

8. The system (100) of any one of the preceding claims,
wherein the control device (120) is configured to determine a fatigue performance value of the identified direct damage information of damages within the captured images based on the database included in the memory device (130).

9. The system (100) of any one of the preceding claims,
wherein the control device (120) is configured to determine a size of a corroded area assigned to the damage area (20).

10. A method (200) for determining an operation time of an aircraft, the method comprising the following steps:
identifying (210) direct damage information on a surface of a metallic component (12) of an aircraft, wherein the direct damage information include a dimension of a damage area, an absolute position of the damage area on the aircraft, and a relative position of the damage area with regard to fasteners and/or other design features of the aircraft;
determining (220) a knock-down-factor of the metallic component based on a database that includes an assignment of direct damage information and fatigue performance of the metallic component;
determining (230) an operation time for the aircraft based on the knock-down-factor.

11. The method of claim 10,
wherein the metallic component (12) includes at least one metallic material like aluminum, steel, and titanium.

12. The method of claim 10 or 11,
wherein the direct damage information includes a value that indicates the number of damages per unit area.

13. The method of any one of claims 10 to 12,
wherein the direct damage information includes information about the distance between neighboring individual damages, their distance, and/or, when two or more individual damages are directly adjacent to each other or overlap each other, the sum of the damaged area of those two or more individual damage areas.

14. The method of any one of claims 10 to 13, further including the following steps:
commanding a mobile image capturing device (110) to scan the metallic component (12) of an aircraft (10) and capture images of the metallic component of the aircraft;
transmitting the captured images to a control device (120);
determining, by the control device (120), direct damage information of damages within the captured images;
determining, by the control device (120), a fatigue performance value based on the direct damage information of damages within the captured images.
